# EUROPÄISCHE PATENTSCHRIFT

(11) **EP 4 200 532 B1**
(45) Veröffentlichungstag und Bekanntmachung des Hinweises auf die Patenterteilung: **23.07.2025**
(21) Anmeldenummer: 21719087.5
(22) Anmeldetag: 12.04.2021
(51) Int. Cl.: F16B 7/06, F16B 37/08, B60P 7/06

(54) **SPANNVORRICHTUNG ZUM SPANNEN VON SPANNMITTELN WIE BEISPIELSWEISE KETTEN, BÄNDERN, SEILEN ODER DERGLEICHEN**
TENSIONING DEVICE FOR TENSIONING TENSIONING MEANS SUCH AS CHAINS, STRAPS, ROPES OR THE LIKE
DISPOSITIF TENDEUR POUR TENDRE DES MOYENS DE TENSION TELS QUE DES CHAÎNES, DES SANGLES, DES CORDES OU SIMILAIRES

(30) Priorität: 19.08.2020 DE 202020104814 U
(43) Veröffentlichungstag der Anmeldung: 28.06.2023
(73) Patentinhaber: TDS GmbH, 44147 Dortmund (DE)
(72) Erfinder: STROMBERG, Tom, 44147 Dortmund (DE); STIEPERMANN, Nils, 44147 Dortmund (DE)
(74) Vertreter: Andrejewski - Honke Patent- und Rechtsanwälte Partnerschaft mbB
(86) Internationale Anmeldenummer: PCT/EP2021/059394
(87) Internationale Veröffentlichungsnummer: WO 2022/037810

(56) Entgegenhaltungen:
- US-A1- 2020 063 774
- US-B2- 10 605 284

## Beschreibung

Die Erfindung betrifft eine Spannvorrichtung zum Spannen von Spannmitteln wie beispielsweise Ketten, Bändern, Seilen, Gewindestangen oder dergleichen, mit wenigstens einer rohrförmigen Spannmutter sowie zumindest einem in die Spannmutter eintauchenden sowie mit ihr wechselwirkenden Gewindebolzen, wobei die Spannmutter in zumindest zwei Spannmutterhälften längsgeteilt ist und wenigstens eine mit einem Führungsbolzen wechselwirkende Führungsöffnung zur radialen Beaufschlagung beider Spannmutterhälften aufweist.

Spannvorrichtungen zum Spannen von Ketten, Bändern, Seilen oder dergleichen werden im Rahmen der Lehre nach der WO 2018/073098 A1 beispielsweise in der Hebe- und Transporttechnik oder allgemein im Logistikbereich eingesetzt. Beispielsweise können die fraglichen Ketten, Seile oder Bänder zum Sichern von Ladungen beispielsweise auf einem LKW genutzt werden. Dazu sind die fraglichen Spannmittel, beispielsweise die Ketten, Seile oder Bänder an einem Ende mit einer Transportfläche gekoppelt, während das andere Ende mit Hilfe der Spannvorrichtung beaufschlagt wird, um das auf diese Weise zu sichernde Transportgut auf der Ladefläche festzulegen. Das hat sich grundsätzlich bewährt.

Neben dem zuvor bereits in Bezug genommenen Stand der Technik nach der WO 2018/073098 A1 werden vergleichbare Spannvorrichtungen auch in Verbindung mit Seilzugeinstellungen entsprechend der EP 2 301 816 B1 genutzt.

Ungeachtet dessen ist durch die DE 2 310 152 ein Spannschloss, insbesondere ein Draht- und Wantenspanner bekannt geworden. Dieser besteht aus einer rohrförmigen Spannmutter, in die von beiden Enden aus je ein Gewindebolzen geschraubt ist. Die beiden Muttergewinde sind gegenläufig und ein Spannvorgang erfolgt durch Verdrehen der Mutter relativ zu den Gewindebolzen. Außerdem sind die Muttergewinde mit unterschiedlichem Durchmesser ausgerüstet, wobei der eine rohrförmig ausgebildete Gewindebolzen in das Muttergewinde größeren Durchmessers eingeschraubt ist.

Der nächstkommende Stand der Technik nach der US 2020/0063774 A1 befasst sich mit einer Spannvorrichtung, die mit einer äußeren Hülse ausgerüstet ist, die eine hierin eintauchende innere Hülse aufnimmt. Durch eine relative Rotation beider Hülsen zueinander kann die im Innern befindliche Spannmutter entlang des Gewindes eines Gewindebolzens bewegt werden. Außerdem ist ein Konuselement vorgesehen, welches für eine Verriegelung beider Hülsen gegeneinander sorgt.

Der Stand der Technik hat sich grundsätzlich bewährt, wenn es darum geht, beispielsweise Transportgut auf der Ladefläche eines Transportfahrzeuges festzulegen bzw. festzuzurren. Allerdings sind in diesem Zusammenhang oftmals mehr oder minder große Spannwege zu absolvieren, um beispielsweise einen Durchhang des betreffenden Spannmittels auszugleichen. Das ist mit den bisher vorhandenen Spannvorrichtungen nur unter erheblichem Aufwand möglich, weil dazu der Gewindebolzen in die ihn aufnehmende rohrförmige Spannmutter eingeschraubt werden muss. Hier setzt die Erfindung ein.

Der Erfindung liegt das technische Problem zugrunde, eine derartige Spannvorrichtung zum Spannen von Spannmitteln wie Ketten, Bändern, Seilen oder dergleichen so weiterzuentwickeln, dass große Spannwege einfach und schnell realisiert werden können bzw. ein etwaiger Durchhang des Spannmittels problemlos beherrscht werden kann.

Zur Lösung dieser technischen Problemstellung ist eine gattungsgemäße Spannvorrichtung zum Spannen von Spannmitteln wie Ketten, Bändern, Seilen oder dergleichen im Rahmen der Erfindung und gemäß Anspruch 1 dadurch gekennzeichnet, dass die Führungsöffnung zweiteilig mit einem Führungsbereich und einem Spreizbereich ausgebildet ist, wobei der Führungsbereich eine an den Führungsbolzen angepasste lichte Weite aufweist, und wobei der Spreizbereich schräg zulaufend in Richtung auf eine Teilungsebene der Spannmutter ausgebildet ist, so dass eine Relativbewegung zwischen dem ortsfesten Führungsbolzen und der Führungsöffnung in der Spannmutter dazu korrespondiert, dass die beiden Spannmutterhälften eine radiale Beaufschlagung in Radialrichtung senkrecht zur Längsrichtung erfahren.

Dadurch, dass die Spannmutter in zumindest zwei Spannmutterhälften längsgeteilt ist, besteht die grundsätzliche Möglichkeit, verschiedene Funktionszustände darstellen zu können. Tatsächlich ermöglicht die Spannmutter in einer ersten Variante ein normales Eindrehen des Gewindebolzens. Hierzu liegen die beiden Spannmutterhälften aneinander im Bereich ihrer Teilungsebene an und greift der im Innern der Spannmutter vorgesehene Gewindegang in das korrespondierende Außengewinde des mit der Spannmutter wechselwirkenden Gewindebolzens ein. Im Rahmen einer zweiten und dritten Variante ist die Spannmutter jeweils geöffnet. Hierzu korrespondiert, dass die beiden Spannmutterhälften jeweils radial beaufschlagt werden. Zu diesem Zweck greift der Führungsbolzen in die Führungsöffnung ein und sorgt hierdurch für die gewünschte radiale Beaufschlagung beider Spannmutterhälften.

Dabei lassen sich die beiden vorgenannten Varianten dahingehend unterscheiden, dass bei der zweiten Variante die beiden Spannmutterhälften jeweils radial gegen die Kraft einer Feder beaufschlagt werden, welche die beiden Spannmutterhälften nach dem durch Hineindrücken des Gewindebolzens verursachtem radialen Aufspreizen der Spannmutterhälften diese wieder in Anlage an den Gewindegang des Gewindebolzens bringt.

Die dritte Variante ist demgegenüber dadurch gekennzeichnet, dass die Spannmutter durchgängig und unter Fixieren der Feder so beaufschlagt wird, dass die beiden Spannmutterhälften radial zueinander beabstandet sind, so dass in diesem Zustand der Gewindebolzen gegenüber der Spannmutter bzw. den beiden beabstandeten Spannmutterhälften problemlos hin- und hergeschoben werden kann. Dadurch lässt sich insgesamt eine Schnellverstellung realisieren, entweder im Rahmen der zweiten Variante unter Berücksichtigung einer oder mehrerer übersprungener Gewindegänge oder entsprechend der dritten Variante, indem der Gewindegang für das nachträgliche Eingreifen praktisch vollkommen flexibel vorgegeben werden kann. Hierin sind die wesentlichen Vorteile zu sehen.

Um die zuvor beschriebene Funktionalität im Detail zu realisieren, sind in der Regel zwei sich gegenüberliegende Führungsöffnungen vorgesehen. Meistens sind auch zwei sich gegenüberliegende ortsfeste Führungsbolzen realisiert. Die beiden sich gegenüberliegenden ortsfesten Führungsbolzen greifen dabei jeweils in die benachbarte zugehörige Führungsöffnung ein. Sobald also die Spannmutter in Längsrichtung bewegt wird, kommt es zur Wechselwirkung zwischen dem betreffenden Führungsbolzen und der Führungsöffnung. Als Folge hiervon können beide Spannmutterhälften radial beaufschlagt werden, so dass infolge ihrer Beabstandung von dem hierin eintauchenden Gewindebolzen der Gewindebolzen linear verschoben werden kann.

Um dies im Detail zu realisieren, ist die jeweilige Führungsöffnung erfindungsgemäß zweiteilig mit dem Führungsbereich und dem Spreizbereich ausgebildet. Der Führungsbereich verfügt über die an den Führungsbolzen angepasste lichte Weite. Demgegenüber ist der Spreizbereich erfindungsgemäß schräg zulaufend in Richtung auf die Teilungsebene der Spannmutter ausgebildet. Als Folge hiervon korrespondiert die Relativbewegung zwischen dem jeweiligen ortsfesten Führungsbolzen und der benachbarten zugehörigen Führungsöffnung im Führungsbereich dazu, dass die beiden Spannmutterhälften radial nicht beaufschlagt werden. Kommt es jedoch zur Wechselwirkung des betreffenden Führungsbolzens mit dem Spreizbereich der Führungsöffnung, so werden hierdurch die beiden Spannmutterhälften radial beaufschlagt und auseinander gespreizt, so dass die beiden Spannmutterhälften mit ihrem innenseitig vorgesehenen Gewindegang nicht (mehr) in das Außengewinde des Gewindebolzens eingreifen bzw. eingreifen können. Der Gewindebolzen lässt sich in diesem Fall dementsprechend gegenüber der Spannmutter linear verschieben.

Nach weiterer vorteilhafter Ausgestaltung taucht die Spannmutter in eine Aufnahme einer Außenhülse ein. Die Außenhülse ist dabei in der Regel ebenfalls - wie die Spannmutter - rohrförmig ausgebildet und nimmt in ihrem Innern die Spannmutter und demzufolge auch den in die Spannmutter eintauchenden Gewindebolzen auf. Die Aufnahme in der Außenhülse ist dabei typischerweise mit einem Anlagebereich für einen Gegenanlagebereich der Spannmutter ausgerüstet. Bei dem Anlagebereich handelt es sich im Allgemeinen um eine Konusaufnahme der Außenhülse bzw. im Innern der Aufnahme der Außenhülse. Demgegenüber ist der Gegenanlagebereich im Allgemeinen als Konusbereich der Spannmutter ausgebildet.

Auf diese Weise kommt es im Innern der Außenhülse zu einer Wechselwirkung zwischen dem Konusbereich der Spannmutter einerseits und der Konusaufnahme im Innern der Außenhülse andererseits. Solange der Konusbereich der Spannmutter in die Konusaufnahme der Außenhülse eintaucht, ist die Spannmutter geschlossen und liegen die beiden Spannmutterhälften aneinander entlang der Teilungsebene an. Dagegen korrespondiert eine Bewegung der Spannmutter in einen sich an die Aufnahme anschließenden erweiterten Bereich im Innern der Außenhülse dazu, dass in diesem erweiterten Bereich die Spannmutter aufspreizen kann, nämlich dadurch, dass die beiden Spannmutterhälften radial beaufschlagt werden.

Die die Spannmutter beaufschlagende und zuvor bereits angesprochene Feder sorgt nun dafür, dass die Spannmutter mit Hilfe der besagten Feder in Richtung auf die Aufnahme in der Außenhülse vorgespannt ist bzw. wird. Zu diesem Zweck stützt sich die Feder regelmäßig gegenüber einer sie umschließenden Federhülse ab. Die Federhülse ist ihrerseits im Innern der Außenhülse gelagert und zwar längsverschiebbar. Dabei hat sich eine verschiebbare Lagerung der Federhülse in der Außenhülse als besonders günstig erwiesen, weil hierdurch nämlich nicht nur die Federhülse, sondern mit ihr die Feder und die Spannmutter linear gegenüber der Außenhülse verlagert werden können und folglich die Spannmutter aus der Aufnahme im Innern der Außenhülse in Richtung des erweiterten Bereiches verlagert werden kann. Dadurch lässt sich die Spannmutter mit Hilfe der verschiebbaren Federhülse in die aufgespreizte Position überführen. Die an dieser Stelle jeweils radial beaufschlagten Spannmutterhälften geben folglich den Gewindebolzen frei, welcher in dieser Stellung beliebig linear gegenüber der Spannmutter hin- und hergeschoben werden kann. Dadurch kann die zuvor bereits angesprochene Schnellverstellung vorgenommen werden.

Darüber hinaus ist die Auslegung meistens so getroffen, dass die die Spannmutter beaufschlagende Feder in der Regel zwischen der Federhülse und einem Adapter eingespannt ist. Der Adapter ist dabei meistens an beide Spannmutterhälften längsverschiebbar angeschlossen. Das heißt, eine etwaige Längsverschiebung der Spannmutter und damit der beiden Spannmutterhälften wird über den Adapter auf die Feder übertragen. Bei diesem Vorgang wird die Feder bei der zuvor beschriebenen zweiten Variante komprimiert, weil hierbei die Federhülse ihre Position im Innern der Außenhülse beibehält und die Spannmutter zusammen mit dem Adapter auf die Feder zubewegt wird. Hierdurch wird die Feder komprimiert.

Demgegenüber kommt es bei der dritten Variante dazu, dass die hierbei verschobene Federhülse zusammen mit der Feder und dem zwischengeschalteten Adapter insgesamt dafür sorgt, dass auch die Spannmutter verschoben wird, nämlich aus der Aufnahme im Innern der Außenhülse auftaucht und in den daran anschließenden erweiterten Bereich verlagert wird. Dadurch spreizt die Spannmutter auf und werden die beiden Spannmutterhälften demzufolge radial beaufschlagt. Als Folge hiervon kann anschließend der in die Spannmutter eintauchende Gewindebolzen in seiner Längsrichtung verschoben werden.

Um die zuvor bereits angesprochene Längsverschiebbarkeit der beiden Spannmutterhälften gegenüber dem Adapter bei gleichzeitiger Möglichkeit zur radialen Beaufschlagung der beiden Spannmutterhälften im Detail umzusetzen, ist der Adapter mit jeweils Radialzapfen ausgerüstet. Die Radialzapfen des Adapters greifen dabei in korrespondierende Zapfenöffnungen der zugehörigen Spannmutterhälften ein. Dadurch können sich die Spannmutterhälften gegenüber dem Adapter radial bewegen, nämlich beaufschlagt durch die Wechselwirkung der Führungsbolzen mit den zugehörigen Führungsöffnungen. Gleichzeitig sorgen die in die Zapfenöffnung eingreifenden Radialzapfen des Adapters dafür, dass der Adapter und die Spannmutter bzw. die beiden zugehörigen Spannmutterhälften längsverschiebbar fest miteinander gekoppelt sind.

Im Ergebnis wird eine Spannvorrichtung zum Spannen von Spannmitteln wie beispielsweise Ketten, Bändern, Seilen oder dergleichen zur Verfügung gestellt, die an den Spannvorgang optimal angepasst ist. Je nach zu absolvierendem Spannweg lassen sich nämlich insgesamt drei Varianten unterscheiden, wie dieser Spannweg überbrückt bzw. absolviert werden kann. Bei der ersten Variante ist die Spannmutter mit ihren beiden Spannmutterhälften geschlossen und erfolgt das Spannen des Spannmittels dadurch, dass der Gewindebolzen in die ihn umschließende Spannmutter ein- oder ausgedreht wird.

Demgegenüber korrespondiert die zweite Variante dazu, dass der Gewindebolzen in die die Spannmutter aufnehmende Außenhülse eingedrückt wird. Hierbei wird die Spannmutter gegen die Kraft der Feder aufgespreizt und die Feder zugleich gespannt. Der zuvor die Spannmutter mitnehmende Gewindebolzen rutscht folglich mit seinem Außengewinde gegenüber dem Gewindegang im Innern der Spannmutter durch, bis die die Spannmutter beaufschlagende Feder dafür gesorgt hat, dass die beiden Spannmutterhälften erneut in Eingriff mit dem Gewindebolzen gebracht werden.

Die schließlich noch mögliche dritte Variante korrespondiert dazu, dass die Mutter zusammen mit der Feder im Innern der Außenhülse längsverschoben wird, so dass hierdurch die beiden Spannmutterhälften aufgespreizt werden. Dieser Zustand kann theoretisch beliebig lange aufrechterhalten werden, solange die Feder zusammen mit der Mutter die gegenüber der Außenhülse eingenommene verschobene Position beibehält. Als Folge hiervon lässt sich der Gewindebolzen in eine beliebige Position gegenüber der Spannmutter bringen. Die dritte Variante lässt sich dabei jederzeit rückgängig machen, wenn die Feder zusammen mit der Spannmutter in ihrer Ausgangsposition verschoben wird und dadurch die beiden zuvor aufgespreizten Spannmutterhälften wieder an den Gewindebolzen angelegt werden. Auf diese Weise wird eine bedarfsweise Schnellverstellung ebenso wie eine Feinverstellung zur Verfügung gestellt, was in dieser Ausprägung bisher nicht bekannt war. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Spannvorrichtung teilweise im Schnitt in ihrer Ausgangsposition,
- Fig. 2A: den Gegenstand nach der Fig. 1 in der Funktionsstellung nach der zweiten Variante mit in die Außenhülse eingedrücktem Gewindebolzen,
- Fig. 2B: eine Perspektive des Gegenstandes nach der Fig. 2A und
- Fig. 3: die Spannvorrichtung nach den Fig. 1 und 2 im Rahmen der dritten Variante mit längsverschobener Mutter und Feder zur Schnellverstellung des Gewindebolzens.

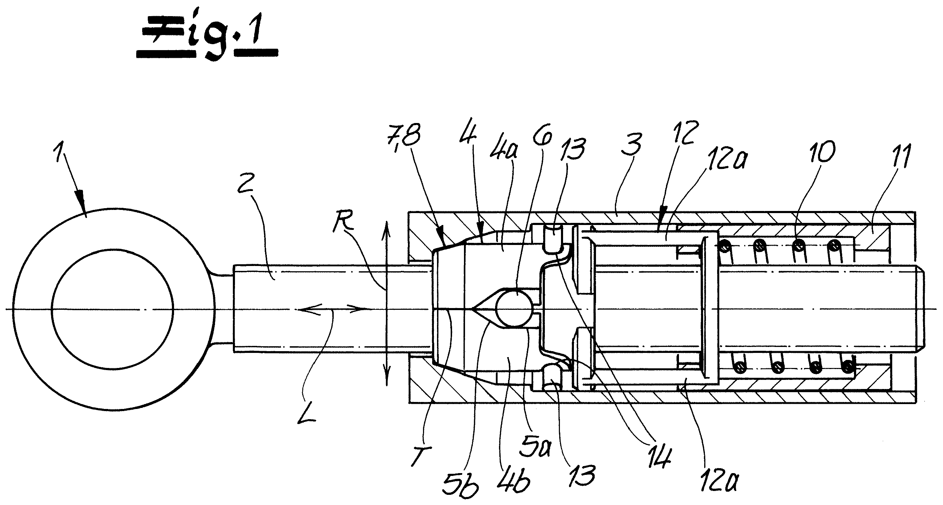

In den Figuren ist eine Spannvorrichtung zum Spannen von Spannmitteln wie Ketten, Bändern, Seilen, Gewindestangen oder dergleichen dargestellt. Dazu mag die dargestellte Spannvorrichtung mit einer lediglich in der Fig. 1 angedeuteten Öse 1 an einem Ende eines Gewindebolzens 2 ausgerüstet sein. In oder an der Öse 1 kann das betreffende Spannmitteln angeschlagen sein. Demgegenüber mag eine Außenhülse 3 ortsfest an eine Transportfläche eines Transportfahrzeuges angeschlossen werden, so dass Bewegungen des Gewindebolzens 2 in der in Fig. 1 angedeuteten Längsrichtung L dazu korrespondieren, dass das fragliche und an die Öse 1 angeschlossene Spannmittel gespannt oder entlastet wird. Zu diesem Zweck wechselwirkt der Gewindebolzen 2 mit einer rohrförmigen Spannmutter 4a, 4b, in welche der Gewindebolzen 2 eintaucht.

Tatsächlich erfolgt die Wechselwirkung des Gewindebolzens 2 mit der rohrförmigen Spannmutter 4a, 4b derart, dass der Gewindebolzen 2 mit einem Außengewinde ausgerüstet ist und die Spannmutter 4a, 4b über ein korrespondierendes Innengewinde bzw. einen zugehörigen und im Innern dargestellten Gewindegang verfügt. Als Folge hiervon lässt sich der Gewindebolzen 2 im Rahmen der in der Fig. 1 dargestellten ersten Variante als Funktionszustand wie üblich in die Spannmutter 4a, 4b eindrehen, so dass auf diese Weise das an die Öse 1 angeschlossene und nicht näher dargestellte Spannmittel je nach Richtung der Drehbewegung des Gewindebolzens 2 gegenüber der Spannmutter 4a, 4b gespannt oder entlastet wird.

Erfindungsgemäß und von besonderer Bedeutung ist nun der Umstand, dass die Spannmutter 4a, 4b in zumindest zwei Spannmutterhälften 4a, 4b längsgeteilt ist. Tatsächlich liegen die beiden Spannmutterhälften 4a, 4b im Rahmen der Variante nach der Fig. 1 und im Normalzustand bzw. Ausgangszustand aneinander an, und zwar mit Bezug zu einer in der Fig. 1 angedeuteten und längsverlaufenden Teilungsebene T. Darüber hinaus verfügt die Spannmutter 4a, 4b über eine Führungsöffnung 5a, 5b, in welche ein Führungsbolzen 6 eintaucht. Eine Relativbewegung zwischen dem ortsfesten Führungsbolzen 6 und der Führungsöffnung 5a, 5b in der Spannmutter 4a ,4b korrespondiert nun dazu, dass die beiden Spannmutterhälften 4a, 4b eine radiale Beaufschlagung in der in Fig. 1 angedeuteten Radialrichtung R senkrecht zur Längsrichtung L erfahren.

Die Spannmutter 4a, 4b ist nach dem Ausführungsbeispiel nicht nur rohrförmig ausgebildet, sondern verfügt frontseitig über einen Konusbereich 7, welcher als Gegenanlagebereich mit einem zugehörigen und als Konusaufnahme 8 ausgebildeten Anlagebereich wechselwirkt. Die Konusaufnahme 8 befindet sich dabei im Innern der Außenhülse 3. Dazu ist die Außenhülse 3 rohrförmig ausgelegt und verfügt kopfseitig über die bereits angesprochene Konusaufnahme 8, welche in Richtung eines Fußendes der Außenhülse 3 in einen erweiterten Bereich 9 übergeht.

Der Konusbereich 7 ist demgegenüber kopfseitig an der Spannmutter 4a, 4b ausgeprägt. Im in der Fig. 1 dargestellten Normalzustand greift der Konusbereich 7 kopfseitig der Spannmutter 4a, 4b in die Konusaufnahme 8 kopfseitig der Außenhülse 3 bzw. der im Innern der Außenhülse 3 vorgesehenen Aufnahme ein, die sich aufgrund des rohrförmigen Charakters der Außenhülse 3 erklärt. Da nach dem Ausführungsbeispiel die Spannmutter 4a, 4b mit zwei sich gegenüberliegenden Führungsöffnungen 5a, 5b ausgerüstet ist, finden sich auch zwei korrespondierende und ebenfalls gegenüberliegende ortsfeste Führungsbolzen 6, die jeweils in die benachbarte zugehörige Führungsöffnung 5a, 5b eingreifen. Man erkennt, dass die jeweilige Führungsöffnung 5a, 5b zweiteilig ausgebildet ist. Tatsächlich ist an dieser Stelle ein Führungsbereich 5a und ein Spreizbereich 5b realisiert.

Die Auslegung des Führungsbereiches 5a der Führungsöffnung 5a, 5b ist dabei so gewählt, dass es sich bei dem Führungsbereich 5a um eine schlitzförmige Öffnung handelt, deren lichte Weite in etwa dem Durchmesser des stiftartigen bzw. zylindrischen Führungsbolzens 6 entspricht. Demgegenüber ist der Spreizbereich 5b schräg zulaufend in Richtung auf die bereits zuvor angesprochene Teilungsebene T der Spannmutter 4a, 4b ausgebildet.

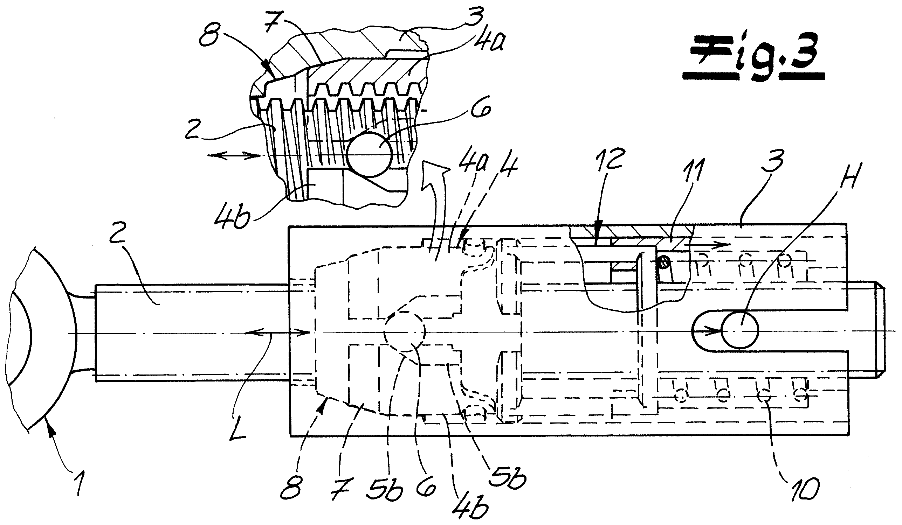

Zum grundsätzlichen Aufbau ist dann noch eine Feder 10 realisiert, mit deren Hilfe die Spannmutter 4a, 4b in Richtung auf die Konusaufnahme 8 innerhalb der Außenhülse 3 vorgespannt wird. Die fragliche Feder 10 stützt sich dabei gegenüber einer Federhülse 11 ab, die ihrerseits innerhalb der Außenhülse 3 gelagert ist. Tatsächlich kann die Federhülse 11 im Innern der Außenhülse 3 in der Längsrichtung L verschoben und in einer gewünschten Position jeweils festgelegt werden, wie dies nachfolgend noch näher beschrieben wird. Dazu mag die Federhülse 11 mit einer entsprechenden Handhabe H ausgerüstet sein, die man in der Fig. 3 erkennt und welche eine Schlitzöffnung in der Außenhülse 3 durchgreifen mag.

Die Feder 10 ist insgesamt zwischen der Federhülse 11 und einem zusätzlich noch vorgesehenen Adapter 12 eingespannt. Der Adapter 12 ist nach dem Ausführungsbeispiel käfigartig ausgelegt und koppelt die Feder 10 bzw. die Federhülse 11 mit der Spannmutter 4a, 4b. Außerdem ist der Adapter 12 längsverschiebbar an die beiden Spannmutterhälften 4a, 4b angeschlossen bzw. in der Federhülse 11 angeordnet. Dazu verfügt der Adapter 12 über Führungsstege 12a, die in Führungsschlitze 11a der Federhülse 11 eingreifen.

Das heißt, eine Bewegung des Adapters 12 in der Längsrichtung L korrespondiert dazu, dass hierbei die Spannmutter 4a, 4b ebenfalls in der Längsrichtung L bewegt wird und auch die Federhülse 11 sowie mit ihr die (nicht komprimierte) Feder 10. Darüber hinaus erkennt man anhand der Figuren, dass der Adapter 12 längsverschiebbar in die Federhülse 11 eintaucht.

Der Adapter 12 ist - wie bereits erläutert - an die beiden Spannmutterhälften 4a, 4b längsverschiebbar angeschlossen, lässt jedoch zugleich eine Radialbewegung der beiden Spannmutterhälften 4a ,4b in der Radialrichtung R zu. Dazu verfügt der Adapter 12 über jeweils Radialzapfen 13, die in korrespondierende Zapfenöffnungen 14 der zugehörigen Spannmutter 4a, 4b bzw. der Spannmutterhälften 4a, 4b eingreifen. Dadurch können die beiden Spannmutterhälften 4a, 4b in der Radialrichtung R aufgespreizt werden, und zwar ohne dass die starre Kopplung der Spannmutter 4a, 4b bzw. ihrer beiden Spannmutterhälften 4a, 4b gegenüber dem Adapter 12 aufgehoben wird.

Die Funktionsweise ist wie folgt. Ausgehend von der Fig. 1 und dem dort dargestellten Normalzustand kann das an die Öse 1 angeschlossene Spannmittel beispielsweise dadurch gespannt werden, dass der Gewindebolzen 2 in die Spannmutter 4a, 4b mehr oder minder eingeschraubt wird. Die Spannmutter 4a, 4b umschließt in dem dargestellten Normalzustand mit ihrem Innengewinde bzw. dem im Innern vorgesehenen Gewindegang das Außengewinde des Gewindebolzens 2, so dass sich entsprechende Schraubbewegungen des Gewindebolzens 2 nachvollziehen lassen und zur gewünschten Bewegung der Öse 1 in der Längsrichtung L korrespondieren.

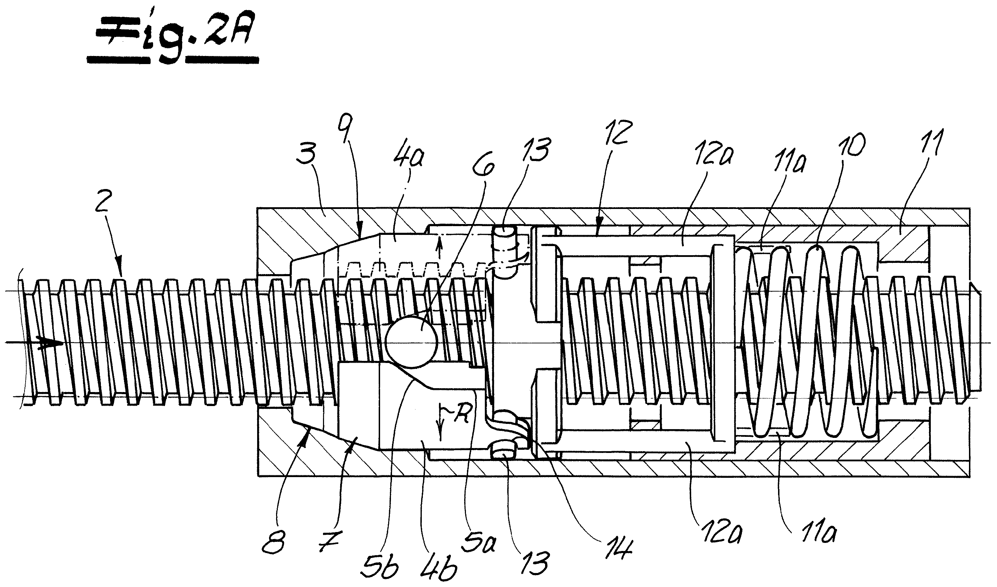

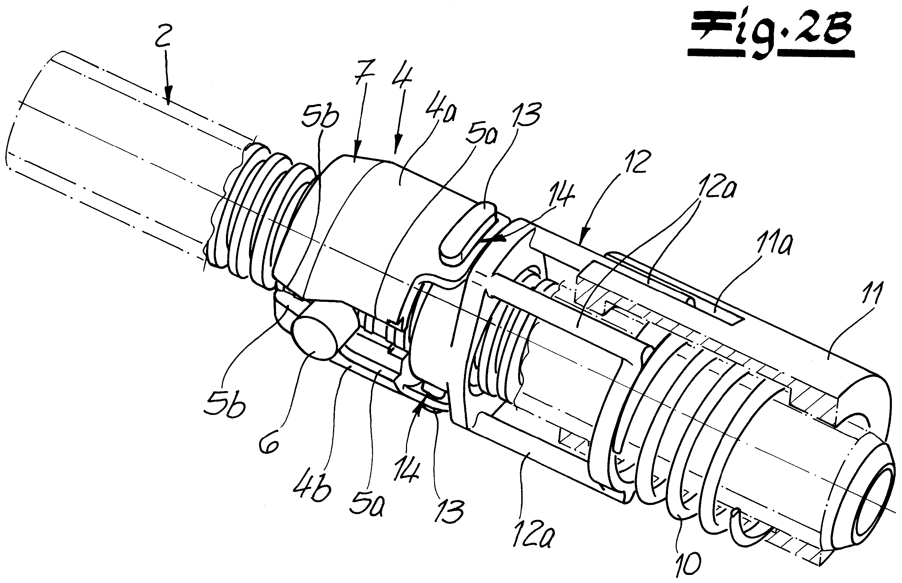

Im Rahmen der in den Fig. 2A, 2B dargestellten zweiten Variante kann nun eine bedingte Schnellverstellung des Gewindebolzens 2 und folglich der Öse 1 vorgenommen werden. Dazu wird der Gewindebolzen 2 ausgehend von dem Ausgangszustand bzw. Normalzustand in der Fig. 1 in die Außenhülse 3 hineingedrückt, und zwar im Ausführungsbeispiel nach rechts. Da die Spannmutter 4a, 4b hierbei in Eingriff mit dem Gewindebolzen 2 ist, folgt die Spannmutter 4a, 4b der bereits beschriebenen Bewegung und dem Hineindrücken des Gewindebolzens 2 in die Außenhülse 3 nach rechts. Als Folge hiervon sorgen die beiden Führungsbolzen 6 dafür, dass sie aufgrund ihres ortsfesten Charakters in den Spreizbereich 5b der Führungsöffnung 5a, 5b eintauchen können. Da der Spreizbereich 5b jeweils schräg zulaufend in Richtung auf die Teilungsebene T der Spannmutter 4a, 4b ausgebildet ist, führt die beschriebene Bewegung der Spannmutter 4a, 4b in Richtung auf die Führungsbolzen 6 hin dazu, dass die Spannmutter 4a, 4b aufgespreizt wird, und zwar in der Radialrichtung R.

Demzufolge werden die beiden Spannmutterhälften 4a, 4b in der Radialrichtung R voneinander und gegenüber der Teilungsebene T radial beabstandet. Das hat zur Folge, dass sich auch der im Innern der Spannmutter 4a, 4b befindliche Gewindegang von dem Außengewinde des Gewindebolzens 2 entfernt und demzufolge der Gewindebolzen 2 in der eingeschlagenen Richtung (nach rechts) bewegt werden kann. Zugleich ist hierbei auch die Feder 10 komprimiert worden, weil der Bewegung der Spannmutter 4a, 4b der Adapter 12 gefolgt ist und zunehmend in die Federhülse 11 eintaucht, welche ihrerseits in Längsrichtung gegenüber der Außenhülse 3 fixiert ist. Dazu weist der Adapter 12 die Längsstege bzw. Führungsstege 12a auf, die in Führungen bzw. die Führungsschlitze 11a der Federhülse 11 längsverschiebbar gelagert sind.

Die komprimierte Feder 10 sorgt nun dafür, dass die Spannmutter 4a, 4b nach links in Richtung auf die Konusaufnahme 8 im Innern der Außenhülse 3 gedrückt wird und somit über den zugehörigen Gewindegang des Gewindebolzens 2 rutscht. Am Ende dieser Bewegung hat sich der Gewindebolzen 2 typischerweise um einen Gewindegang nach rechts bewegt und ist danach die Spannmutter 4a, 4b unmittelbar wieder in Eingriff mit dem Gewindebolzen 2 durch die Kraft der zuvor komprimierten Feder 10 gekommen. Hierzu korrespondiert die zuvor bereits beschriebene zweite Variante der denkbaren Funktionszustände. Grundsätzlich können hierdurch auch zwei oder mehr Gewindegänge überbrückt werden.

Die dritte Variante der Funktionszustände korrespondiert nun zur Darstellung in der Fig. 3. Hier erkennt man, dass die Federhülse 11 gegenüber der Außenhülse 3 nach rechts bewegt worden ist. Das führt zugleich dazu, dass mit der Federhülse 11 (mit Hilfe der Handhabe H) auch die Feder 10 sowie der Adapter 12 und dadurch schließlich die Spannmutter 4a, 4b ebenfalls nach rechts bewegt werden. Das mag mit Hilfe der äußeren Handhabe H erfolgen. Als Folge hiervon können die beiden ortsfesten Führungsbolzen 6 erneut in den Spreizbereich 5b der Führungsöffnung 5a, 5b eintauchen und sorgen dafür, dass die beiden Spannmutterhälften 4a, 4b in der Radialrichtung R aufgespreizt werden. Da bei diesem Vorgang die Feder 10 nicht komprimiert wurde, lässt sich der in der Fig. 3 dargestellte Funktionszustand nach der dritten Variante beliebig lange aufrechterhalten und kann infolge der beiden in Bezug auf den Gewindebolzen 2 radial abgehobenen Spannmutterhälften 4a ,4b der Gewindebolzen 2 und mit ihm die Öse 1 linear in der Längsrichtung L beliebig hin- und herbewegt werden.

Dieser Zustand lässt sich dann wieder aufheben, wenn die Federhülse 11 nach links in den Ausgangszustand bzw. Normalzustand nach der Fig. 1 zurückbewegt wird, so dass als Folge hiervon der Konusbereich 7 der Spannmutter 4a, 4b in die Konusaufnahme 8 eintaucht und dadurch die beiden Spannmutterhälften 4a, 4b geschlossen werden.

## Patentansprüche

1. Spannvorrichtung zum Spannen von Spannmitteln wie Ketten, Bändern, Seilen, Gewindestangen oder dergleichen, mit wenigstens einer rohrförmigen Spannmutter (4a, 4b) sowie zumindest einem in die Spannmutter (4a, 4b) eintauchenden sowie mit ihr wechselwirkenden Gewindebolzen (2), wobei
die Spannmutter (4a, 4b) in zumindest zwei Spannmutterhälften (4a, 4b) längsgeteilt ist und wenigstens eine mit einem Führungsbolzen (6) wechselwirkende Führungsöffnung (5a, 5b) zur radialen Beaufschlagung beider Spannmutterhälften (4a ,4b) aufweist,
**dadurch gekennzeichnet, dass**
die Führungsöffnung (5a, 5b) zweiteilig mit einem Führungsbereich (5a) und einem Spreizbereich (5b) ausgebildet ist, wobei
der Führungsbereich (5a) eine an den Führungsbolzen (6) angepasste lichte Weite aufweist, und wobei
der Spreizbereich (5b) schräg zulaufend in Richtung auf eine Teilungsebene (T) der Spannmutter (4a, 4b) ausgebildet ist, so dass
eine Relativbewegung zwischen dem ortsfesten Führungsbolzen (6) und der Führungsöffnung (5a, 5b) in der Spannmutter (4a, 4b) dazu korrespondiert, dass die beiden Spannmutterhälften (4a, 4b) eine radiale Beaufschlagung in Radialrichtung (R) senkrecht zur Längsrichtung (L) erfahren.

2. Spannvorrichtung nach Anspruch 1, **dadurch gekennzeichnet, dass** zwei sich gegenüberliegende Führungsöffnungen (5a, 5b) vorgesehen sind.

3. Spannvorrichtung nach Anspruch 2, **dadurch gekennzeichnet, dass** zwei sich gegenüberliegende ortsfeste Führungsbolzen (6) jeweils in die benachbarte zugehörige Führungsöffnung (5a, 5b) eingreifen.

4. Spannvorrichtung nach einem der Ansprüche 1 bis 3, **dadurch gekennzeichnet, dass** die Spannmutter (4a, 4b) in eine Aufnahme einer Außenhülse (3) eintaucht.

5. Spannvorrichtung nach Anspruch 4, **dadurch gekennzeichnet, dass** die Aufnahme einen Anlagebereich (8) für einen Gegenanlagebereich (7) der Spannmutter (4a, 4b) aufweist.

6. Spannvorrichtung nach Anspruch 5, **dadurch gekennzeichnet, dass** der Anlagebereich (8) als Konusaufnahme (8) der Außenhülse (3) und der Gegenanlagebereich (7) als Konusbereich (7) der Spannmutter (4a, 4b) ausgebildet ist.

7. Spannvorrichtung nach einem der Ansprüche 4 bis 6, dass die Spannmutter (4a ,4b) mit Hilfe einer Feder (10) in Richtung auf die Aufnahme in der Außenhülse (3) vorgespannt ist.

8. Spannvorrichtung nach Anspruch 7, **dadurch gekennzeichnet, dass** sich die Feder (10) gegenüber einer Federhülse (11) abstützt.

9. Spannvorrichtung nach Anspruch 8, **dadurch gekennzeichnet, dass** die Federhülse (11) in der Außenhülse (3) verschiebbar und insbesondere längsverschiebbar gelagert ist

10. Spannvorrichtung nach einem der Ansprüche 7 bis 9, **dadurch gekennzeichnet, dass** die Feder (10) zwischen der Federhülse (11) und einem Adapter (12) eingespannt ist.

11. Spannvorrichtung nach Anspruch 10, **dadurch gekennzeichnet, dass** der Adapter (12) an beide Spannmutterhälften (4a, 4b) längsverschiebbar angeschlossen ist.

12. Spannvorrichtung nach Anspruch 10 oder 11, **dadurch gekennzeichnet, dass** der Adapter (12) mit jeweils Radialzapfen (13) in korrespondierende Zapfenöffnungen (14) der zugehörigen Spannmutterhälften (4a, 4b) eingreift.

## Claims

1. A tensioning device for tensioning tensioning means such as chains, straps, ropes, threaded rods or the like, comprising at least one tubular tensioning nut (4a, 4b) and at least one threaded bolt (2) that is inserted into and interacts with the tensioning nut (4a, 4b), wherein
the tensioning nut (4a, 4b) is longitudinally divided into at least two tensioning nut halves (4a, 4b) and has at least one guide opening (5a, 5b) that interacts with a guide pin (6) in order to radially act upon both tensioning nut halves (4a, 4b),
**characterized in that**
the guide opening (5a, 5b) is realized in two parts with a guiding region (5a) and a spreading region (5b), wherein
the guiding region (5a) has a clear width that is adapted to the guide pin (6), and wherein
the spreading region (5b) is realized in a tapered manner in the direction of a partition plane (T) of the tensioning nut (4a, 4b) such that
a relative movement between the stationary guide pin (6) and the guide opening (5a, 5b) in the tensioning nut (4a, 4b) corresponds to both tensioning nut halves (4a, 4b) being radially acted upon in the radial direction (R) perpendicular to the longitudinal direction (L).

2. The tensioning device according to claim 1, **characterized in that** two opposing guide openings (5a, 5b) are provided.

3. The tensioning device according to claim 2, **characterized in that** two opposing stationary guide pins (6) respectively engage into the associated adjacent guide opening (5a, 5b).

4. The tensioning device according to one of claims 1 to **3, characterized in that** the tensioning nut (4a, 4b) is inserted into a receptacle of an outer sleeve (3).

5. The tensioning device according to claim 4, **characterized in that** the receptacle has a contact region (8) for a mating contact region (7) of the tensioning nut (4a, 4b).

6. The tensioning device according to claim 5, **characterized in that** the contact region (8) is realized in the form of a conical receptacle (8) of the outer sleeve (3) and the mating contact region (7) is realized in the form of a conical region (7) of the tensioning nut (4a, 4b).

7. The tensioning device according to one of claims 4 to 6, **characterized in that** the tensioning nut (4a, 4b) is prestressed in the direction of the receptacle in the outer sleeve (3) with the aid of a spring (10).

8. The tensioning device according to claim 7, **characterized in that** the spring (10) is supported against a spring sleeve (11).

9. The tensioning device according to claim 8, **characterized in that** the spring sleeve (11) is arranged in the outer sleeve (3) so as to be displaceable and, in particular, longitudinally displaceable.

10. The tensioning device according to one of claims 7 to 9, **characterized in that** the spring (10) is mounted between the spring sleeve (11) and an adapter (12).

11. The tensioning device according to claim 10, **characterized in that** the adapter (12) is connected to both tensioning nut halves (4a, 4b) in a longitudinally displaceable manner.

12. The tensioning device according to claim 10 or 11, **characterized in that** the adapter (12) engages into corresponding pin openings (14) of the associated tensioning nut halves (4a, 4b) with respective radial pins (13).

## Revendications

1. Dispositif de serrage pour le serrage de dispositifs de serrage tels que chaînes, courroies, cordes, tiges filetées ou similaires, comportant au moins un écrou de serrage tubulaire (4a, 4b) et au moins un boulon fileté (2) s'étendant dans l'écrou de serrage (4a, 4b) et coopérant avec celui-ci, dans lequel
l'écrou de serrage (4a, 4b) est divisé longitudinalement en au moins deux moitiés d'écrou de serrage (4a, 4b) et présente au moins une ouverture de guidage (5a, 5b) coopérant avec un boulon de guidage (6) pour solliciter radialement les deux moitiés d'écrou de serrage (4a, 4b),
**caractérisé en ce que**
l'ouverture de guidage (5a, 5b) est formée en deux parties, avec une zone de guidage (5a) et une zone d'expansion (5b), dans lequel
la zone de guidage (5a) présente une largeur libre adaptée au boulon de guidage (6) et dans lequel
la zone d'expansion (5b) est conçue pour se rétrécir obliquement vers un plan de joint (T) de l'écrou de serrage (4a, 4b),
de sorte qu'un mouvement relatif entre le boulon de guidage fixe (6) et l'ouverture de guidage (5a, 5b) dans l'écrou de serrage (4a, 4b) corresponde à une sollicitation radiale des deux moitiés d'écrou de serrage (4a, 4b) dans la direction radiale (R) perpendiculaire à la direction longitudinale (L).

2. Dispositif de serrage selon la revendication 1, **caractérisé en ce que** deux ouvertures de guidage opposées (5a, 5b) sont prévues.

3. Dispositif de serrage selon la revendication 2, **caractérisé en ce que** deux boulons de guidage fixes opposés (6) viennent en prise respectivement dans l'ouverture de guidage adjacente associée (5a, 5b).

4. Dispositif de serrage selon une des revendications 1 à 3, **caractérisé en ce que** l'écrou de serrage (4a, 4b) plonge dans un logement d'un manchon extérieur (3).

5. Dispositif de serrage selon la revendication 4, **caractérisé en ce que** le logement présente une zone de contact (8) pour une zone de contre-contact (7) de l'écrou de serrage (4a, 4b).

6. Dispositif de serrage selon la revendication 5, **caractérisé en ce que** la zone de contact (8) est conçue comme un logement conique (8) du manchon extérieur (3) et la zone de contre-contact (7) est conçue comme une zone conique (7) de l'écrou de serrage (4a, 4b).

7. Dispositif de serrage selon une des revendications 4 à 6, **caractérisé en ce que** l'écrou de serrage (4a, 4b) est précontraint par un ressort (10) dans la direction du logement dans le manchon extérieur (3).

8. Dispositif de serrage selon la revendication 7, **caractérisé en ce que** le ressort (10) s'appuie contre une douille à ressort (11).

9. Dispositif de serrage selon la revendication 8, **caractérisé en ce que** la douille à ressort (11) est montée de manière mobile, notamment longitudinalement, dans la douille extérieure (3).

10. Dispositif de serrage selon une des revendications 7 à 9, **caractérisé en ce que** le ressort (10) est serré entre la douille à ressort (11) et un adaptateur (12).

11. Dispositif de serrage selon la revendication 10, **caractérisé en ce que** l'adaptateur (12) est relié aux deux moitiés d'écrou de serrage (4a, 4b) de manière mobile longitudinalement.

12. Dispositif de serrage selon la revendication 10 ou 11, **caractérisé en ce que** l'adaptateur (12) vient en prise avec des goupilles radiales (13) dans des ouvertures de goupille correspondantes (14) des moitiés d'écrou de serrage (4a, 4b) associées.
